# EUROPÄISCHE PATENTSCHRIFT

(11) **EP 0 818 338 B1**
(45) Veröffentlichungstag und Bekanntmachung des Hinweises auf die Patenterteilung: **30.07.2003**
(21) Anmeldenummer: 97111308.9
(22) Anmeldetag: 04.07.1997
(51) Int. Cl.: B60H 3/06, B60H 1/00

(54) **Belüftungseinrichtung für eine Fahrzeugkabine und Filtergehäuse**
Ventilation device for a vehicle cab and filter housing
Dispositif de ventilation pour cabine de véhicule et encadrement pour filtre

(30) Priorität: 12.07.1996 DE 19628089
(43) Veröffentlichungstag der Anmeldung: 14.01.1998
(73) Patentinhaber: DEERE & COMPANY, Moline Illinois 61265-8098 (US)
(72) Erfinder: Teich, Micheael, 68199 Mannheim (DE); Wagner, Jürgen, 64287 Darmstadt (DE)
(74) Vertreter: Magin, Ludwig Bernhard

(56) Entgegenhaltungen:
- EP-A- 0 070 636
- US-A- 4 365 541
- US-A- 4 531 453
- US-A- 4 989 500

## Beschreibung

Die Erfindung betrifft die Belüftungseinrichtung für eine Fahrzeugkabine, insbesondere für die Kabine eines landwirtschaftlichen oder industriellen Fahrzeugs, gemäß dem Oberbegriff des Patentanspruchs 1. Die Erfindung betrifft ferner einen Filtereinschub für eine derartige Belüftungseinrichtung.

Bei landwirtschaftlichen oder industriellen Fahrzeugen, beispielsweise bei Ackerschleppern, ist es wünschenswert zur Klimatisierung der Kabine nicht nur von außen Frischluft anzusaugen, sondern auch die Kabineninnenluft umzuwälzen. Hierdurch lassen sich die Serviceintervalle vergrößern, da die Außenluftfilter nicht so schnell verschmutzen, und der Leistungsbedarf für eine Temperierung der Kabine kann herabgesetzt werden. Beispielsweise beschreibt die EP-A-0 042 597 eine Luftverteileinrichtung mit zwei Gebläsen, von denen ein erstes Gebläse, dem ein Frischluftfilter vorgeschaltet ist, von außen Frischluft in das Fahrerhaus ansaugt und ein zweites Gebläse, dem ein Umluftfilter vorgeschaltet ist, Rauminnenluft umwälzt. Die von den Gebläsen angesaugte Außenluft und die Innenluft werden in einer den beiden Gebläsen nachgeordneten Mischzone vereint. Für einen Filterservice läßt sich jeder Filter separat herausnehmen und reinigen oder austauschen. Dies ist relativ aufwendig und birgt die Gefahr in sich, daß die Reinigung des Umluftfilters vergessen wird.

Die EP-B-0 070 636 beschreibt ein Heiz- und Belüftungssystem für eine Traktorkabine, welches lediglich einen Frischluftkreis aufweist. In dem Frischluftkreis befindet sich ein Filter, welcher von einer Öffnung, die sich oben im Dachbereich des Traktors befindet, zugänglich ist. Durch diese Öffnung läßt sich der Filter in den Frischluftstrom einsetzen oder herausnehmen. Es werden Maßnahmen zur Abdichtung des Filters beschrieben. Die angegebene Ausbildung soll den Filtereinbau verbessern und vereinfachen. Eine Umwälzung der Kabinenluft wird nicht beschrieben.

Aus der DE-C-36 43 478 geht ein Luftfilterkasten für eine Fahrerkabine hervor, bei der die Luftführung über eine an einem über die Seitenwand der Kabine hinausragenden Dachbereich angeordnete Filtereinheit erfolgt. Die Filtereinheit besteht aus einem Filterkasten, welcher einen Filter aufnimmt und schwenkbar aufgehängt ist, so daß er sich zum Herausnehmen und Reinigen des Filters abklappen läßt. Auch hier werden Maßnahmen zur Abdichtung des Filters beschrieben, ohne daß auf eine Umwälzung der Kabinenluft eingegangen wird.

Die USA-4,531,453 beschreibt eine Belüftungseinrichtung für die Fahrerkabine eines Mähdreschers mit einem Gehäuse, an das ein Gebläse angeschlossen ist, welches von einer äußeren Lufteintrittsöffnung Frischluft ansaugt. Das Gehäuse beherbergt des Weiteren einen Vorreiniger, einen Frischluftfilter, einen Wärmetauscher und ein weiteres Gebläse, die koaxial zueinander ausgerichtet sind und der Luftversorgung einer ins Kabineninnere mündenden Versorgungsleitung dienen. Die Rückführung der Kabinenluft in das Gehäuse erfolgt über einen Umluftluftfilter in eine Mischkammer stromabwärts von dem Frischluftfilter, wo sich die getrennt zugeführte Frischluft und Umluft vereinen. Der Vorreiniger und beide Filter lassen sich über eine Zugangsklappe von außen inspizieren und warten. Der Austausch der beiden getrennten Filter ist jedoch auch bei dieser Anordnung erschwert.

Durch die US-A-4,365,541 ist eine Filtereinrichtung der eingangs genannten Art für ein Raupenfahrzeug bekannt geworden, bei dem das Kabineninnere sowohl durch einen Frischluftstrom als auch durch einen Umluftstrom versorgt wird. Es ist eine Filtereinrichtung mit zwei hintereinander angeordneten Filtern vorgesehen. Der erste Filter wird lediglich von Frischluft durchströmt, während der nachgeordnete Filter sowohl von dem aus dem ersten Filter austretenden Frischluftstrom als auch von einem zwischen den Filtern durchtretenden Umluftstrom durchströmt wird. Die Filter lassen sich durch eine Öffnung quer zum Luftstrom aus einem den Luftstrom einschließenden Gehäuse einzeln herausnehmen. Ein Filterwechsel ist hierbei immernoch aufwendig, insbesondere besteht die Gefahr, daß beim Filterwechsel Staub und Schmutzpartikel in das Kabineninnere gelangen.

Die der Erfindung zugrunde liegende Aufgabe wird darin gesehen, eine gattungsgemäße Belüftungseinrichtung derart auszubilden, daß die eingangs genannten Probleme überwunden werden. Insbesondere sollen für eine Belüftungseinrichtung, bei der neben einer Frischluftzufuhr die Kabinenluft umgewälzt wird, der Filterwechsel erleichtert werden. Ferner soll ein für die Belüftungseinrichtung geeignetes Filtergehäuse angegeben werden.

Die Aufgabe wird erfindungsgemäß durch die Lehre des Patentanspruchs 1 bzw. 10 gelöst. Weitere vorteilhafte Ausgestaltungen und Weiterbildungen der Erfindung gehen aus den Unteransprüchen hervor.

Bei der erfindungsgemäßen Belüftungseinrichtung wird Frischluft aus der Umgebung der Fahrzeugkabine von einem Gebläse angesaugt und ins Kabineninnere geleitet. Durch eine Serviceöffnung in der Belüftungseinrichtung läßt sich in den von der Frischluft durchströmten Kanal ein Filtergehäuse im wesentlichen quer zur Strömungsrichtung einschieben, in welchem wenigstens ein Filter montiert ist. Neben der Frischluftzufuhr ist ein Umluftstrom vorgesehen, bei dem ein Gebläse durch eine Umlufteintrittsöffnung Umluft aus dem Kabineninneren ansaugt und durch eine Austrittsöffnung zurück in die Kabine bläst. Die Umluft durchströmt wenigstens einen Filter, welcher ebenfalls in dem Filtergehäuse montiert ist. Die Luftströme können gemeinsam durch ein oder durch mehrere Gebläse gefördert werden.

Erfindungsgemäß ist neben dem von Frischluft durchströmten Frischluftfilter ein separater, nur von Umluft durchströmter Umluftfilter in dem Filtergehäuse angeordnet. Dabei werden die beiden Luftströme in getrennten Kanälen ihren zugehörigen Filtern zugeführt, so daß der Frischluftfilter ausschließlich von Frischluft und der Umluftfilter ausschließlich von Umluft durchströmt wird. Diese getrennte Filterung hat den Vorteil, daß unterschiedliche Filtertypen für die beiden Luftströme verwendet werden können. So kann beispielsweise der Frischluftfilter ein Papierfilter sein, das wirkungsvoll die staubige Umgebungsluft filtert, und der Umluftfilter kann ein Schaumstoffilter sein, welcher grobe Staubpartikel zurückhält. Wahlweise können die Filterelemente als Anti-Tox-, Anti-Geruchs- oder Pollenfilter ausgeführt werden.

Der erfindungsgemäße Filtereinschub besteht aus einem Filtergehäuse, das wenigstens einen Frischluftfilter und wenigstens einen Umluftfilter aufnimmt, die hinsichtlich des Luftstroms nebeneinander angeordnet sind und zwischen denen wenigstens eine Trennwand ausgebildet ist, so daß eine getrennte Filterung von Frischluft und Umluft erfolgen kann.

Der Filtereinschub bzw. das Filtergehäuse ist als eine beispielsweise vertikal nach unten herausnehmbare "Schublade" ausgeführt. Da sowohl der Frischluft- als auch der Umluftfilter in einem gemeinsamen Filtergehäuse montiert sind und dieses Filtergehäuse so ausgebildet sein kann, daß es gleichzeitig als Staubsammelbehälter dient, ist es möglich, zum Reinigen das Filtergehäuse gemeinsam mit beiden Filterelementen und dem Schmutz, der sich in dem Filtergehäuse vor den Filtern gesammelt hat, nach unten herauszuziehen. Gegebenenfalls kann dann das Filtergehäuse komplett aus der Fahrzeugkabine genommen werden, um die beiden Filterelemente und das Filtergehäuse zu reinigen und ggf. die Filter zu ersetzen. Eine Verschmutzung der Kabine ist dabei nahezu ausgeschlossen. Durch das gemeinsame Herausnehmen des Filtergehäuses mit den beiden Filterelementen läßt sich der Filterservice wesentlich erleichtern. Außerdem läßt es sich vermeiden, daß die Reinigung oder das Wechseln eines der beiden Filterelemente bei der Wartung vergessen wird.

Nach dem Herausnehmen des Filtergehäuses ist durch die frei werdende Serviceöffnung ein sehr guter Zugang zu den weiteren Komponenten der Belüftungseinrichtung gegeben. Heizkörper und Verdampfer sowie eine Vielzahl von elektrischen Bauteilen, die in die Belüftungseinrichtung integriert sind, werden für Kontroll- und Wartungsarbeiten zugänglich.

Zweckmäßigerweise werden der Frischluft- und der Umluftstrom unmittelbar nach dem Durchströmen der Filter zusammengeführt und gelangen miteinander vermischt zu wenigstens einem Gebläse, welches sie durch geeignete Düsen in die Fahrzeugkabine bläst.

Es ist von Vorteil im Ansaugbereich des Frischluftstroms und/oder des Umluftstroms Einstellmittel vorzusehen, durch die eine wahlweise Drosselung der Luftströme möglich ist. Beispielsweise wird die Umlufteintrittsöffnung der Belüftungseinrichtung mit einem verstellbaren Schieber versehen, durch den sich der Eintrittsquerschnitt für den Umluftstrom einstellen läßt. Diese Ausbildung erlaubt es, das Verhältnis von angesaugter Frischluft zu angesaugter Umluft wunschgemäß einzustellen.

Vorzugsweise wird die Frischluft im seitlichen und/oder hinteren Dachbereich der Kabine von außen angesaugt und über geeignete Kanäle im Kabinendach dem Frischluftfilter zugeführt.

Aus Platzgründen ist die Belüftungseinrichtung vorzugsweise im Dachbereich der Fahrzeugkabine angeordnet. Sie weist eine vom Kabineninneren zugängliche nach unten offene Serviceöffnung auf, in die der Filtereinschub bzw. das Filtergehäuse im wesentlichen von unten nach oben in den Frischluftstrom einschiebbar ist. Diese Ausbildung ermöglicht eine gute Zugänglichkeit der Filter und erleichtert die Servicearbeiten.

Vorzugsweise ist im oberen Bereich des Filtergehäuses wenigstens ein Frischluftfilter und seitlich angrenzend hierzu im unteren Bereich des Filtergehäuses wenigstens ein Umluftfilter angeordnet, so daß sich im montierten Zustand des Filtereinschubs der Umluftfilter unterhalb des Frischluftfilters befindet. Die beiden Filterelemente können aber auch auf andere Art und Weise in dem Filtergehäuse angeordnet sein (beispielsweise nebeneinander).

Die Umlufteintrittsöffnung befindet sich zweckmäßigerweise im Filtergehäuse selbst. Dabei wird die Umluft beispielsweise an der Unterseite des Filtergehäuses durch ein Ansauggitter angesaugt. Das Ansauggitter kann fest eingestellt oder variabel zur Drosselung des Umluftstroms ausgeführt sein.

Die Belüftungseinrichtung enthält vorzugsweise einen dem Filtergehäuse nachgeordneten Verdampfer und/oder Heizer, dem seinerseits wenigstens ein Gebläse nachgeordnet ist. Nach dem Durchströmen der Filterelemente vermischen sich die Luftströme und werden gekühlt oder erwärmt in das Kabineninnere geblasen.

Wahlweise kann im Frischluftbereich ein Zusatzgebläse eingebaut sein, welches durch einen fest definierten, ggf. auch einstellbaren Frischluftstrom für einen konstanten Innendruck in der Kabine sorgt.

Eine besonders zweckmäßige Ausgestaltung der Erfindung sieht vor, daß sich unmittelbar an dem Auslaß jedes Gebläses Auslaßdüsen befinden, die als Austrittsöffnung dienen und über die die Luftströme direkt in die Kabine ausgeblasen werden. Die Auslaßdüsen können exzentrisch gelagert sein und schräggestellte Rippen aufweisen. Hierdurch ist eine optimale Luftführung möglich.

Der Filtereinschub wird zweckmäßigerweise durch zwei Sterngriffschrauben nach oben in seiner Einbaulage fixiert. Alternativ hierzu sind auch Ausführungen mit Schnell- oder Bajonettverschluß (siehe beispielsweise Fig. 9 der EP-B-0 070 636) denkbar.

Vorzugsweise weist das Filtergehäuse Führungselemente, beispielsweise Flansche auf, die in Führungsschienen, beispielsweise Nuten des Gehäuses der Belüftungseinrichtung geführt werden. Das Filtergehäuse kann ganz oder teilweise aus Kunststoff oder Metall ausgeführt sein.

Die Befestigung des Frischluftfilters und/oder des Umluftfilters wird vorzugsweise so ausgeführt, daß die Verwendung von Werkzeug nicht erforderlich ist. Hierfür können Flügelschrauben, Spannvorrichtungen, Bajonettverschlüsse, Spangen aus Federstahl oder ähnliches dienen. Der Umluftfilter wird vorzugsweise zwischen Stegen des Filtergehäuses eingelegt oder eingeklemmt. Die Befestigung des Frischluftfilters in dem Filtergehäuse kann beispielsweise mit Hilfe von je zwei Flügelschrauben erfolgen. Dabei kann eine Flügelschraube an ihrem vorderen und hinteren Endbereich jeweils einen Gewindeabschnitt aufweisen, die durch einen dazwischen liegenden schlankeren Schaft voneinander getrennt sind. Nach dem Lösen der Flügelschraube kann diese axial verschoben und mittels des anderen Gewindebereichs fixiert werden. Dadurch wird verhindert, daß die Flügelschraube beim Herausnehmen stört oder verloren geht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine erfindungsgemäße Belüftungseinrichtung in Explosionsdarstellung,
- Fig. 2: eine schematische Seitenschnittansicht der in Fig. 1 dargestellten Belüftungseinrichtung und
- Fig. 3: eine schematische Aufsicht der in Fig. 1 dargestellten Belüftungseinrichtung.

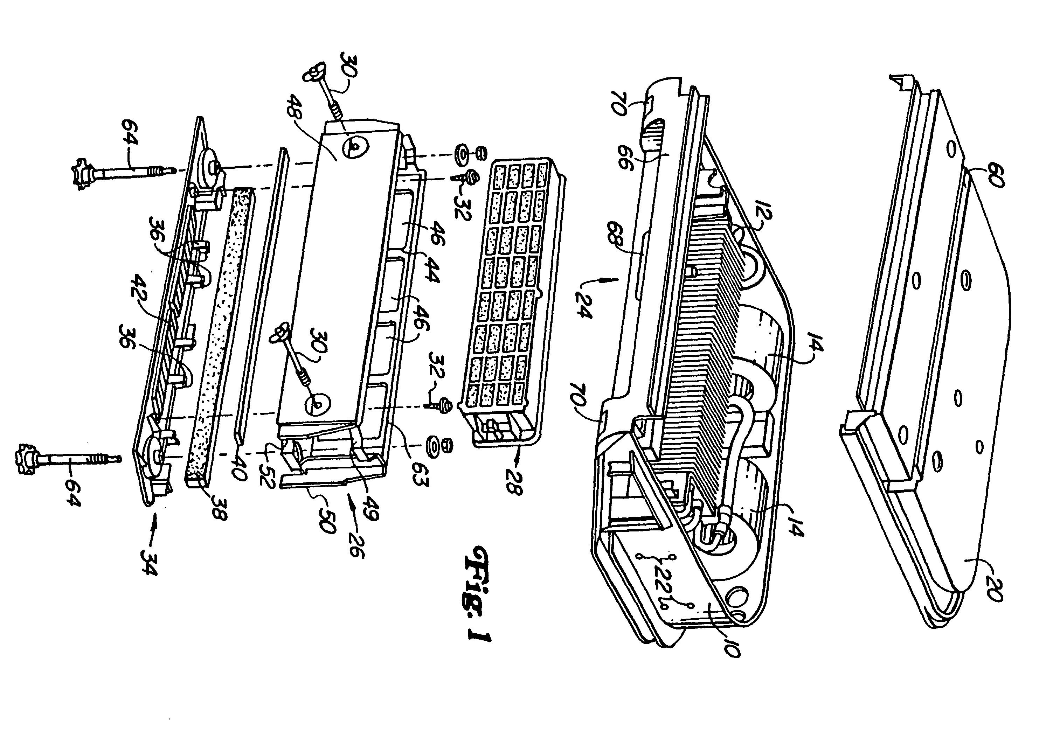

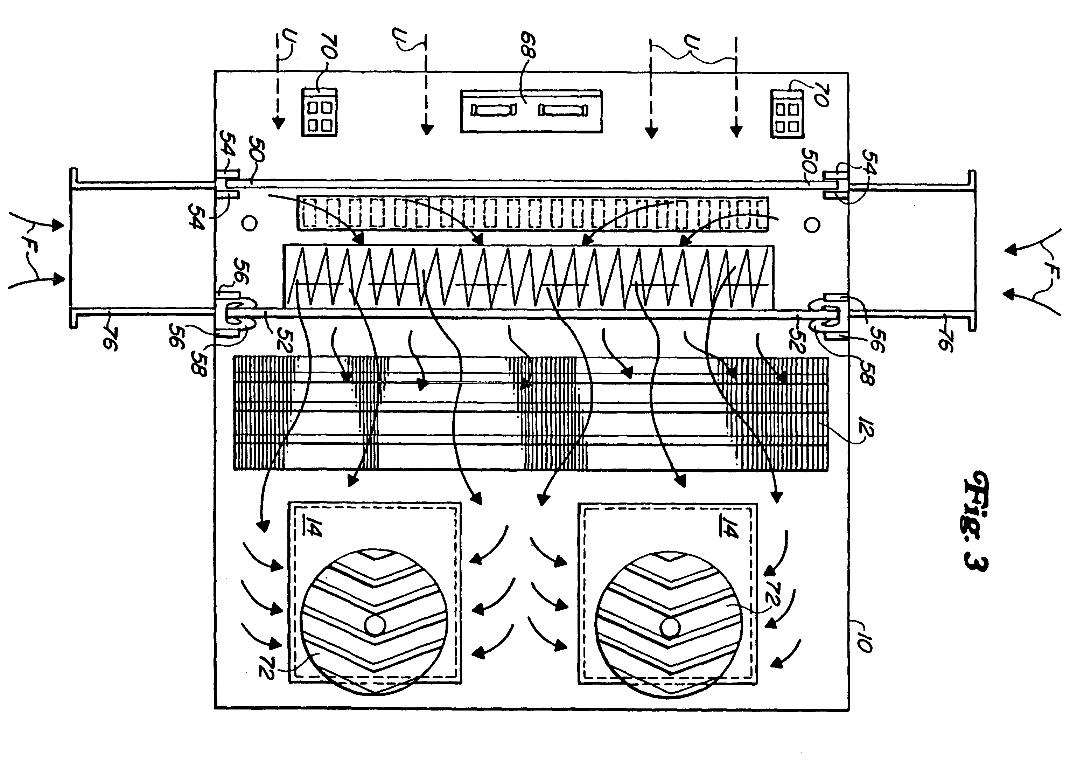

Die in den Fig. 1 bis 3 dargestellte Belüftungseinrichtung ist für einen Ackerschlepper vorgesehen. In einem Gehäuse 10 der Belüftungseinrichtung sind eine Verdampfer- und Heizeinheit 12 sowie in ihrem hinsichtlich der Fahrtrichtung des Schleppers vorderen Bereich zwei Radialgebläse 14 angeordnet. In einem unteren Bereich der Verdampfer- und Heizeinheit 12 wird das Kondensatwasser 16 aufgefangen, welches über einen nicht dargestellten Schlauch, der an einen Rohrstutzen 18 anschließbar ist, abgeleitet werden kann.

Das Gehäuse 10 ist durch einen Deckel 20 und eine nicht näher gezeigte Dichtung verschließbar. Es weist auf seinen beiden Seiten Befestigungsbohrungen 22 auf, an die nicht dargestellte Laschen anschraubbar sind. Durch die Laschen läßt sich die Belüftungseinrichtung von innen im vorderen Dachbereich der nicht näher dargestellten Fahrzeugkabine befestigen. Das Gehäuse 10 hat eine nach unten offene Serviceöffnung 24, in die von unten ein Filtergehäuse 26 einschiebbar ist.

In dem Filtergehäuse 26 ist ein Frischluftfilter 28, beispielsweise ein Papierfilter, durch zwei Flügelschrauben 30 ohne die Verwendung von Werkzeug befestigbar. An die Unterseite des Filtergehäuses 26 ist mit Schrauben 32, von denen zwei dargestellt sind, ein Gehäusedeckel 34 angeschraubt. Der Gehäusedeckel 34 trägt zwei Reihen von Stegen 36, die nach oben weisen und zwischen denen ein Umluftfilter 38, beispielsweise ein Schaumstoffilter, einklemmbar ist. Zwischen dem Frischluftfilter 28 und dem darunter liegenden Umluftfilter 38 ist eine Trennwand 40 angeordnet, um den eintretenden Frischluftstrom von dem Umluftstrom zu trennen. Der Gehäusedeckel 34 weist ein Ansauggitter, insbesondere ein Umlufteinlaßgitter 42 auf, welches als Umlufteintrittsöffnung dient. Das Umlufteinlaßgitter 42 kann mit nicht näher dargestellten Einstellmitteln, z. B. einen Schieber, versehen sein, durch den sich der Lufteintrittsquerschnitt verändern läßt, um den Umluftstrom variabel einstellen zu können.

Die bezüglich der Fahrtrichtung des Schleppers vordere Seitenwand 44 des Filtergehäuses 26 weist Durchbrechungen 46 auf, durch die die aus dem Frischluftfilter '28 und dem Umluftfilter 38 austretende Luft zu der Verdampfer- und Heizeinheit 12 strömen kann. Die hintere Seitenwand 48 des Filtergehäuses 26 ist verschlossen. Das Filtergehäuse 26 ist seitlich offen, so daß, wie später erläutert werden wird, Frischluft einströmen kann. Oben ist das Filtergehäuse 26 ebenfalls offen. Die vordere Seitenwand 44 und die hintere Seitenwand 48 des Filtergehäuses 26 sind zu ihrer Stabilisierung durch Verbindungsbrücken 49 miteinander verbunden.

Das Filtergehäuse 26, der Frischluftfilter 28, der Umluftfilter 38, die Trennwand 40 und der Gehäusedeckel 34 lassen sich zu einem Filtereinschub zusammensetzen, der von unten in die Serviceöffnung 24 des Gehäuses 10 einschiebbar ist. Zu diesem Zweck weist das Filtergehäuse 26 an seinen Seiten je einen vorderen Flansch 50 und einen hinteren Flansch 52 auf. Die Flansche 50, 52 werden in entsprechenden im Gehäuse 10 ausgebildeten Führungselementen 54, 56, die nutförmig ausgebildet sind, geführt. Zur Abdichtung sind in die vorderen Führungsnuten 56 Dichtungsprofile 58 eingelegt. Der Deckel 20 weist eine quer verlaufende, nach oben gerichtete Auswölbung 60 auf, durch die eine nach unten offene Nut gebildet wird, welche ein Dichtband 62 aufnimmt. In dieser Nut stützt sich der obere Randbereich 63 der Vorderseite 44 des Filtergehäuses 26 ab, so daß die vordere Seitenwand 44 geführt ist und dichtend am Deckel 20 anliegt. Die Dichtprofile 58 und das Dichtband 62 dienen der Abdichtung der Reinluftseite gegenüber der Rohluftseite.

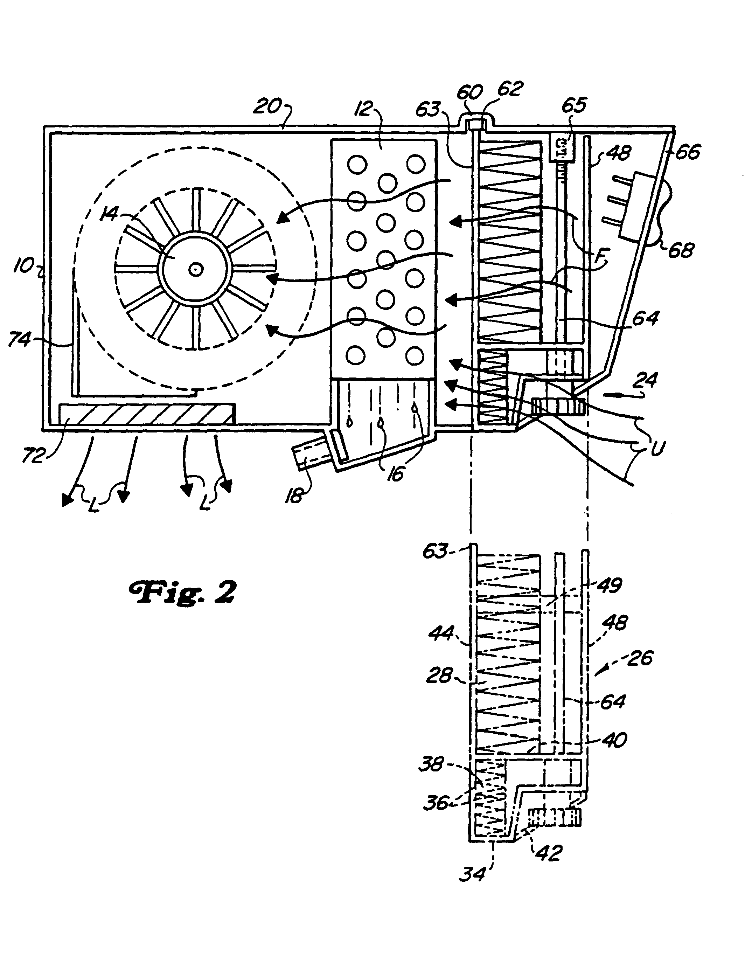

Zur Befestigung des Filtereinschubs, der in Fig. 2 sowohl in eingeschobener als auch in herausgezogener Stellung gezeigt ist, in dem Gehäuse 10 sind zwei Befestigungsschrauben, insbesondere Sterngriffschrauben 64, vorgesehen. Diese lassen sich von Hand leicht in entsprechende am Deckel befestigte Gewindebuchsen 65 oder dergleichen einschrauben, so daß die Montage und Demontage des Filtereinschubs mühelos und ohne Werkzeug erfolgen kann. Da sich der von den Filtern 28, 38 zurückgehaltene Staub auf der Trennwand 40 oder innen auf dem Gehäusedeckel 34 ablagert, kann zum Reinigen der Filter 28, 38 der Filtereinschub komplett nach unten aus der Belüftungseinrichtung gezogen und dann aus der Kabine genommen werden, ohne daß das Kabineninnere verunreinigt wird. Außerhalb der Kabine erfolgt dann die Reinigung oder der Austausch der Filter 28, 38. Auch hierfür ist kein Werkzeug erforderlich.

Bei herausgenommenem Filtereinschub ist durch die Serviceöffnung 24 ein bequemer Zugang zu Komponenten der Belüftungseinrichtung oder anderen, in dem Gehäuse 10 angeordneten Bauteilen möglich. Beispielsweise kann die Verdampfer- und Heizeinheit 12 einer Sichtkontrolle unterzogen werden, um festzustellen, ob sie verschmutzt ist und gereinigt werden muß. Ferner sind elektrische Bauteile, die in dem Gehäuse 10 angeordnet sind, für Wartungsarbeiten zugänglich. Solche Bauteile können sich beispielsweise auf der hinsichtlich der Fahrtrichtung des Schleppers hinteren Rückwandung 66 des Gehäuses 10, die als Bedien- und Anzeigefeld genutzt werden kann, befinden. Stellvertretend für derartige Bauelemente sind in den Figuren eine Innenleuchte 68 und zwei Schalter 70 angedeutet.

Vorn auf der Unterseite des Gehäuses 10 befinden sich zwei Auslaßdüsen 72, durch die die von den beiden Gebläsen 14 geförderte Luft unmittelbar in das Kabineninnere tritt. Die Auslaßdüsen 72 befinden sich jeweils direkt auf dem Auslaßstutzen 74 des zugehörigen Gebläses 14. Sie sind exzentrisch gelagert und weisen schräggestellte Rippen auf. Hierdurch ist eine optimale Luftführung möglich und die Bedienungsperson kann durch Verdrehen der Auslaßdüsen 72 und durch Einstellung der Schrägstellung ihrer Rippen die Belüftung der Kabine wunschgemäß einstellen.

Die Frischluft F wird über nicht gezeigte Eintrittsöffnungen im hinteren, seitlichen Kabinendachbereich angesaugt und zwischen Innen- und Außendach weitergeleitet. Sie tritt dann über zwei kurze Luftkanäle 76 in das Gehäuse 10 ein, und durchströmt den Frischluftfilter 28. Die Umluft U wird durch das Umlufteinlaßgitter 42 im Filtergehäuse 26 angesaugt und durchströmt den Umluftfilter 38. Die beiden Luftströme F und U laufen im wesentlichen parallel durch ihren zugehörigen Filter 28, 38. In Strömungsrichtung hinter den beiden Filtern 28 und 38 vereinen und vermischen sich der Frischluftstrom F und der Umluftstrom U und treten gemeinsam durch die Verdampfer- und Heizeinheit 12 und dann in eines der beiden Radialgebläse 14, die die gefilterte, temperierte, und gegebenenfalls klimatisierte Luft L durch die Auslaßdüsen 72 in die Kabine ausblasen. Jedes der Radialgebläse 14 wird durch einen nicht näher dargestellten Elektromotor angetrieben und saugt die Luft von seinen beiden axialen Seiten an.

## Patentansprüche

1. Belüftungseinrichtung für eine Fahrzeugkabine, insbesondere für die Kabine eines landwirtschaftlichen oder industriellen Fahrzeugs, mit einem Gehäuse (10) und wenigstens einem darin angeordneten Gebläse (14), das Frischluft (F) von wenigstens einer äußeren Eintrittsöffnung der Fahrzeugkabine und/oder Umluft (U) von wenigstens einer sich ins Kabineninnere öffnenden Umlufteintrittsöffnung (42) zu wenigstens einer ins Kabineninnere mündenden Austrittsöffnung (72) fördert, und mit einer Filtereinheit, die sich wahlweise durch eine Serviceöffnung (24) im wesentlichen quer zum Luftstrom in das Gehäuse (10) derart einschieben läßt, daß sie von der Frischluft (F) und der Umluft (U) durchströmt wird, **dadurch gekennzeichnet, daß** die Filtereinheit ein Filtergehäuse (26) enthält, welches wenigstens einen Frischluftfilter (28) und wenigstens einen separaten Umluftfilter (38) aufnimmt, die hinsichtlich der Luftströme (F, U) nebeneinander angeordnet sind und zwischen denen wenigstens eine Trennwand (40) ausgebildet ist, welche eine getrennte Filterung von Frischluft (F) und Umluft (U) ermöglicht.

2. Belüftungseinrichtung nach Anspruch 1, **dadurch gekennzeichnet, daß** sich die Frischluft- und Umluftströme (F, U) nach der Filterung vereinigen und vermischen und gemeinsam von wenigstens einem Gebläse (14) gefördert werden.

3. Belüftungseinrichtung nach Anspruch 1 oder 2, **dadurch gekennzeichnet, daß** Einstellmittel im Ansaugbereich des Frischluftstroms (F) und/oder Umluftstroms (U) vorgesehen sind, durch die eine wahlweise Drosselung der Luftströme (F, U) möglich ist.

4. Belüftungseinrichtung nach einem der Ansprüche 1 bis 3, **dadurch gekennzeichnet, daß** die Belüftungseinrichtung im Dach der Fahrzeugkabine anordenbar ist, daß die Frischluft (F) im Dachbereich der Kabine von außen angesaugt wird und daß die Serviceöffnung (24) sich im Kabineninneren befindet.

5. Belüftungseinrichtung nach einem der Ansprüche 1 bis 4, **dadurch gekennzeichnet, daß** die Belüftungseinrichtung im Dach der Fahrzeugkabine anordenbar ist und daß das Filtergehäuse (26) im wesentlichen von unten nach oben durch die nach unten offene Serviceöffnung (24) in den Luftstrom (F, U) einschiebbar ist.

6. Belüftungseinrichtung nach Anspruch 5, **dadurch gekennzeichnet, daß** im oberen Bereich des Filtergehäuses (26) wenigstens ein Frischluftfilter (28) und im unteren Bereich des Filtergehäuses (26) wenigstens ein Umluftfilter (38) angeordnet ist.

7. Belüftungseinrichtung nach einem der Ansprüche 1 bis 6, **dadurch gekennzeichnet, daß** sich die wenigstens eine Umlufteintrittsöffnung (42) im Filtergehäuse (26) befindet.

8. Belüftungseinrichtung nach einem der Ansprüche 1 bis 7, **dadurch gekennzeichnet, daß** das Filtergehäuse (26) durch zwei Sterngriffschrauben (64) in seiner Einbaulage fixierbar ist und daß der Frischluftfilter (28) und/oder der Umluftfilter (38) mit Hilfe von Flügelschrauben (30) im Filtergehäuse (26) befestigbar ist.

9. Belüftungseinrichtung nach einem der Ansprüche 1 bis 8, **dadurch gekennzeichnet, daß** die Führung des Filtergehäuses (26) in dem Gehäuse (10) der Belüftungseinrichtung durch wenigstens zwei in einer Führungsschiene (54, 56, 60) geführte Flansche (50, 52, 63) erfolgt.

10. Filtereinschub für eine Belüftungseinrichtung nach einem der Ansprüche 1 bis 9, wobei der Filtereinschub das Filtergehäuse (26) enthält, welches wenigstens den Frischluftfilter (28) und den wenigstens einen Umluftfilter (38) aufnimmt, die hinsichtlich des Luftstroms (F, U) nebeneinander angeordnet sind und zwischen denen wenigstens die Trennwand (40) ausgebildet ist, welche eine getrennte Filterung von Frischluft (F) und Umluft (U) ermöglicht.

11. Filtereinschub nach Anspruch 10, **dadurch gekennzeichnet, daß** das Filtergehäuse (26) Führungselemente (54, 56, 60) aufweist, die dem Einschieben durch eine Serviceöffnung (24) des Gehäuses (10) der Belüftungseinrichtung in den quer zur Einschubrichtung ausgerichteten Luftstrom (F, U) dienen.

12. Filtereinschub nach Anspruch 10 oder 11, **dadurch gekennzeichnet, daß** das Filtergehäuse (26) wenigstens eine Eintrittsöffnung (42) für die Umluft (U) aufweist, welche bei in die Serviceöffnung (24) des Gehäuses (10) eingeschobenem Filtereinschub nach außen offen ist und den unmittelbaren Eintritt von Kabinenluft (U) ermöglicht.

## Claims

1. A ventilation device for a vehicle cab, especially for the cab of an agricultural or industrial vehicle, with a housing (10) and at least one blower (14) arranged therein, which supplies fresh air (F) from at least one external inlet opening of the vehicle cab and/or recirculated air (U) from at least one recirculation inlet opening (42) opening into the cab interior to at least one outlet opening (72) opening into the cab interior, and with a filter unit which can be selectively pushed in through a service opening (24) substantially transverse to the airstream into the housing (10), so that the fresh air (F) and the recirculated air (U) flows therethrough, **characterized in that** the filter unit includes a filter housing (26) which receives at least one fresh air filter (28) and at least one separate recirculated air filter (38), which are arranged beside one another in relation to the airstreams (F, U) and between which at least one partition wall (40) is formed which enables separate filtering of fresh air (F) and recirculated air (U).

2. A ventilation device according to claim 1, **characterized in that** the fresh air and recirculated air streams (F, U) unite and mix following the filtering and are fed together by at least one blower (14).

3. A ventilation device according to claim 1 or 2, **characterized in that** adjusting means are provided in the suction region of the fresh air stream (F) and/or the recirculated air stream (U), through which selective throttling of the airstreams (F, U) is possible.

4. A ventilation device according to any of claims 1 to 3, **characterized in that** the ventilation device can be arranged in the roof of the vehicle cab, **in that** the fresh air (F) is sucked in from the outside in the roof region of the cab and **in that** the service opening (24) is located in the cab interior.

5. A ventilation device according to any of claims 1 to 4, **characterized in that** the ventilation device can be arranged in the roof of the vehicle cab and **in that** the filter housing (26) can be pushed into the airstream (F, U) through the downwardly open service opening (24) essentially upwards from below.

6. A ventilation device according to claim 5, **characterized in that** at least one fresh air filter (28) is arranged in the upper region of the filter housing (26) and at least one recirculated air filter (38) is arranged in the lower region of the filter housing (26).

7. A ventilation device according to any of claims 1 to 6, **characterized in that** the at least one recirculated air inlet opening (42) is located in the filter housing (26).

8. A ventilation device according to any of claims 1 to 7, **characterized in that** the filter housing (26) can be fixed in its installed position by two star-grip screws (64) and **in that** the fresh air filter (28) and/or the recirculated air filter (38) can be fixed in the filter housing (26) with the aid of wing bolts (30).

9. A ventilation device according to any of claims 1 to 8, **characterized in that** the guiding of the filter housing (26) into the housing (10) of the ventilation device is effected by at least two flanges (50, 52, 63) guided in a guide rail (54, 56, 60).

10. A filter insert for a ventilation device according to any of claims 1 to 9, wherein the filter insert includes the filter housing (26), which receives at least the fresh air filter (28) and the at least one recirculated air filter (38), which are arranged beside one another in relation to the airstream (F, U) and between which at least the partition wall (40) is formed, which enables separate filtering of fresh air (F) and recirculated air (U).

11. A filter insert according to claim 10, **characterized in that** the filter housing (26) has guide elements (54, 56, 60) which serve for the pushing in through a service opening (24) of the housing (10) of the ventilation device into the airstream (F, U) directed transverse to the insertion direction.

12. A filter insert according to claim 10 or 11, **characterized in that** the filter housing (26) comprises at least one inlet opening (42) for the recirculated air (U) which is open to the outside with the filter insert pushed into the service opening (24) of the housing (10) and which enables direct entry of cab air (U).

## Revendications

1. Dispositif de ventilation pour cabine de véhicule, en particulier pour la cabine d'un véhicule agricole ou industriel, comprenant un boîtier (10) et au moins un ventilateur (14) disposé à l'intérieur de celui-ci, qui transporte de l'air frais (F) depuis au moins un orifice d'entrée extérieur de la cabine de véhicule et/ou de l'air ambiant (U) depuis au moins un orifice d'entrée d'air ambiant (42) s'ouvrant à l'intérieur de la cabine vers au moins un orifice de sortie (72) aboutissant à l'intérieur de la cabine, et comprenant une unité de filtration, qui est introduite au choix à travers un orifice auxiliaire (24) sensiblement transversalement par rapport au courant d'air dans le boîtier (10), de telle sorte qu'elle soit traversée par l'air frais (F) et l'air ambiant (U), **caractérisé en ce que** l'unité de filtration comporte un boîtier de filtration (26), lequel loge au moins un filtre à air frais (28) et au moins un filtre à air ambiant (38) séparé, qui sont disposés par rapport aux courants d'air (F, U) l'un à côté de l'autre et entre lesquels est formée au moins une paroi de séparation (40), laquelle permet une filtration séparée de l'air frais (F) et de l'air ambiant (U).

2. Dispositif de ventilation selon la revendication 1, **caractérisé en ce que** les courants d'air frais et d'air ambiant (F, U) se rassemblent et se mélangent après la filtration et sont transportés ensemble par au moins un ventilateur (14).

3. Dispositif de ventilation selon la revendication 1 ou 2, **caractérisé en ce que** des moyens de réglage, par lesquels un étranglement au choix des courants d'air (F, U) est possible, sont prévus dans la zone d'aspiration du courant d'air frais (F) et/ou du courant d'air ambiant (U).

4. Dispositif de ventilation selon l'une des revendications 1 à 3, **caractérisé en ce que** le dispositif de ventilation peut être disposé dans le toit de la cabine de véhicule, **en ce que** l'air frais (F) est aspiré de l'extérieur dans la zone du toit de la cabine et **en ce que** l'orifice auxiliaire (24) se situe à l'intérieur de la cabine.

5. Dispositif de ventilation selon l'une des revendications 1 à 4, **caractérisé en ce que** le dispositif de ventilation peut être disposé dans le toit de la cabine de véhicule et **en ce que** le boîtier de filtration (26) peut être introduit sensiblement de bas en haut à travers l'orifice auxiliaire (24) ouvert vers le bas dans le courant d'air (F, U).

6. Dispositif de ventilation selon la revendication 5, **caractérisé en ce qu'**est disposé au moins un filtre à air frais (28) dans la zone supérieure du boîtier de filtration (26), et au moins un filtre à air ambiant (38) dans la zone inférieure du boîtier de filtration (26).

7. Dispositif de ventilation selon l'une des revendications 1 à 6, **caractérisé en ce qu'**au moins un des orifices d'entrée d'air ambiant (42) se situe dans le boîtier de filtration (26).

8. Dispositif de ventilation selon l'une des revendications 1 à 7, **caractérisé en ce que** le boîtier de filtration (26) peut être fixé dans sa position de montage par l'intermédiaire de deux vis à tête en étoile (64) et **en ce que** le filtre à air frais (28) et/ou le filtre à ambiant (38) peut être fixé à l'aide de vis papillon (30) dans le boîtier de filtration (26).

9. Dispositif de ventilation selon l'une dès revendications 1 à 8, **caractérisé en ce que** le guidage du boîtier de filtration (26) dans le boîtier (10) du dispositif de ventilation se fait par l'intermédiaire d'au moins deux brides (50, 52, 63) guidées dans un rail de guidage (54, 56, 60).

10. Insertion de filtration pour un dispositif de ventilation selon l'une des revendications 1 à 9, l'insertion de filtration comprenant le boîtier de filtration (26), lequel loge au moins le filtre à air frais (28) et au moins un des filtres à air ambiant (38), qui sont disposés par rapport au courant d'air (F, U) l'un à côté de l'autre et entre lesquels est formée au moins la paroi de séparation (40), laquelle permet une filtration séparée de l'air frais (F) et de l'air ambiant (U).

11. Insertion de filtration selon la revendication 10, **caractérisée en ce que** le boîtier de filtration (26) présente des éléments de guidage (54, 56, 60) qui servent à l'introduction à travers un orifice auxiliaire (24) du boîtier (10) du dispositif de ventilation dans le courant d'air (F, U) dirigé transversalement par rapport à la direction de l'insertion.

12. Insertion de filtration selon la revendication 10 ou 11, **caractérisé en ce que** le boîtier de filtration (26) comprend au moins un orifice d'entrée (42) pour l'air ambiant (U), lequel orifice est ouvert sur l'extérieur lors d'une insertion de filtration introduite dans l'orifice auxiliaire (24) du boîtier (10) et autorise l'entrée immédiate de l'air de la cabine (U).
